# EUROPÄISCHE PATENTSCHRIFT

(11) **EP 3 760 670 B1**
(45) Veröffentlichungstag und Bekanntmachung des Hinweises auf die Patenterteilung: **10.08.2022**
(21) Anmeldenummer: 20178326.3
(22) Anmeldetag: 04.06.2020
(51) Int. Cl.: C08L 9/06, C08C 19/22, C08C 19/25, C08C 19/44

(54) **KAUTSCHUKMISCHUNG UND REIFEN**
RUBBER COMPOSITION AND TYRES
MÉLANGE DE CAOUTCHOUC ET PNEU

(30) Priorität: 04.07.2019 DE 102019209823
(43) Veröffentlichungstag der Anmeldung: 06.01.2021
(73) Patentinhaber: Continental Reifen Deutschland GmbH, 30165 Hannover (DE)
(72) Erfinder: SA, Catarina, 30419 Hannover (DE); PAVON SIERRA, Viktoria, 30419 Hannover (DE); MÜLLER, Norbert, 30419 Hannover (DE)
(74) Vertreter: Continental Corporation

(56) Entgegenhaltungen:
- EP-A1- 2 746 323
- EP-A1- 2 876 115
- EP-A1- 2 963 086
- EP-A1- 3 170 680
- EP-A1- 3 181 630
- US-A1- 2012 165 464
- US-A1- 2018 099 527

## Beschreibung

Die Erfindung betrifft eine schwefelvernetzbare Kautschukmischung und einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist eine Verbesserung des Rollwiderstandes üblicherweise mit einer Verschlechterung des Bremsverhaltens verbunden.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Mikrostruktur einzusetzen. Außerdem lassen sich Styrol-Butadien-Copolymere modifizieren, indem z. B. die Styrol- und Vinyl-Anteile variiert werden, Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

In der EP 3 150 403 A1 werden kieselsäurehaltige Kautschukmischungen für Reifen mit niedrigem Rollwiderstand beschrieben, die lösungspolymerisierte Styrol-Butadien-Copolymere enthalten, welche an wenigstens einem Kettenende mit aminogruppen-enthaltenden Alkoxysilylgruppen und einer weiteren Gruppe ausgewählt aus der Gruppe bestehend aus Alkoxysilylgruppen und aminogruppen-enthaltenden Alkoxysilylgruppen funktionalisiert sind. Die Rollwiderstandsreduzierung begründet sich vermutlich in einer verstärkten Füllstoff-Polymer-Wechselwirkung.

Auch in der EP 3 150 402 A1, der EP 3 150 401 A1, der DE 10 2015 218 745 A1 und der DE 10 2015 218 746 A1 werden die lösungspolymerisierten Styrol-Butadien-Copolymere beschrieben, welche an wenigstens einem Kettenende mit aminogruppen-enthaltenden Alkoxysilylgruppen und einer weiteren Gruppe ausgewählt aus der Gruppe bestehend aus Alkoxysilylgruppen und aminogruppen-enthaltenden Alkoxysilylgruppen funktionalisiert sind. Sie werden in Kombination mit unterschiedlichen weiteren Zuschlagstoffen der Kautschukmischungen eingesetzt.

Weitere lösungspolymerisierte Styrol-Butadien-Copolymere mit zumindest einer Funktionalisierung sind aus folgenden Schriften bekannt: US 2018/0099527 A1, EP 2 876 115 A1, EP 2 963 086 A1, US 2012/0165464 A1.

Die EP 2 703 416 A1 offenbart modifizierte lösungspolymerisierte Styrol-Butadien-Copolymere, deren Herstellung und deren Verwendung in Reifen. Die Styrol-Butadien-Copolymere weisen stickstoffenthaltende Gruppen (aminogruppen-enthaltende Organosilylgruppen) auf, die bei der Herstellung der Polymere mit Schutzgruppen geschützt waren. Die Kautschukmischungen mit derartigen Styrol-Butadien-Copolymeren sollen sich durch ein ausgewogenes Verhältnis von Verarbeitbarkeit, Nassgriff und niedriger Hysterese auszeichnen.

Kautschukmischungen mit den vorgenannten lösungspolymerisierte Styrol-Butadien-Copolymeren mit aminogruppen-enthaltenden Alkoxysilylgruppen zeichnen sich häufig durch einen niedrigen Rollwiderstand beim Einsatz am Reifen aus, das Bremsverhalten der Mischungen auf nasser Straße liegt aber durch die geringe Hysterese nicht auf dem gewünschten Niveau.

Kautschukmischungen mit unterschiedlichen lösungspolymerisierten Styrol-Butadien-Copolymeren und Harzen auf der Basis von Isopropenylbenzol sind z. B. aus der EP 3 181 630 A1, der EP 2 746 323 A1 und der EP 3 170 680 A1 bekannt.

Ausgehend von diesem Stand der Technik liegt der Erfindung die Aufgabe zugrunde, Kautschukmischungen für die Laufstreifen von Fahrzeugluftreifen bereitzustellen, die beim Reifen den Konflikt zwischen den sich gegensätzlich verhaltenden Reifeneigenschaften Nassgriff und Rollwiderstand zumindest entschärft.

Gelöst wird diese Aufgabe durch eine Kautschukmischung, die
- 20 - 100 phr (Gewichtsteile, bezogen auf 100 Gewichtsteile der gesamten Kautschuke in der Mischung) zumindest eines funktionalisierten Styrol-Butadien-Copolymers A, wobei das funktionalisierte Styrol-Butadien-Copolymer A an einem Kettenende mit einer aminogruppen- und/oder ammoniumgruppen-enthaltenden Organosilylgruppe funktionalisiert ist,
   und wobei das funktionalisierte Styrol-Butadien-Copolymer A am anderen Kettenende mit einer Aminogruppe funktionalisiert ist,
- bis zu 80 phr zumindest eines weiteren Dienkautschuks,
- 40 - 350 phr zumindest eines Füllstoffes und
- 5 bis 150 phr zumindest eines Harzes auf der Basis von Isopropenylbenzol enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch den Einsatz eines speziell funktionalisierten lösungspolymerisierten Styrol-Butadien-Copolymers in Kombination mit 5 bis 150 phr zumindest eines Harzes auf der Basis von Isopropenylbenzol eine füllstoffhaltige Kautschukmischung erhalten werden kann, die beim Einsatz im Laufstreifen von Reifen zu einer Entkopplung des Zielkonfliktes zwischen Rollwiderstand und Nassbremsen führt.

Durch die beiden unterschiedlichen funktionellen Gruppen am Styrol-Butadien-Copolymer A scheinen sowohl Wechselwirkungen des Polymers mit in der Mischung vorhandenen polaren Füllstoffen, wie Kieselsäure, als auch mit in der Mischung vorhandenen unpolaren Füllstoffen stattfinden zu können. Im Zusammenspiel mit dem Harz auf der Basis von Isopropenylbenzol ergeben sich überraschend besonders gute Eigenschaften im Hinblick auf den Nassgriff und den Rollwiderstand.

Bei dem funktionalisierten Styrol-Butadien-Copolymer A kann es sich sowohl um emulsions- als auch um lösungspolymerisierte Typen handeln. Bevorzugt handelt es sich um lösungspolymerisiertes Styrol-Butadien-Copolymer (SSBR), da in Lösung die Polymerisation zu den Funktionalisierungsgruppen besser gesteuert werden kann.

Das funktionalisierte Styrol-Butadien-Copolymer A weist bevorzugt ein Gewichtsmittel M_{w} des Molekulargewichts gemäß GPC von 300000 bis 500000 g/mol, besonders bevorzugt 300000 bis 400000 g/mol, auf und kann damit auch als zumindest bei Raumtemperatur fester Kautschuk bezeichnet werden.

Das funktionalisierte Styrol-Butadien-Copolymer A kann im unvulkanisierten Zustand unterschiedliche Styrol-Gehalte von 5 bis 45 Gew.-% aufweisen. Für einen besonders guten Rollwiderstand weist das funktionalisierte Styrol-Butadien-Copolymer A bevorzugt einen Styrol-Gehalt von 5 bis 20 Gew.-% auf. Für besonders guten Nassgriff weist das funktionalisierte Styrol-Butadien-Copolymer A bevorzugt einen Styrol-Gehalt von 21 bis 30 Gew.-% auf.

Der Vinyl-Anteil des funktionalisierte Styrol-Butadien-Copolymer A beträgt 5 bis 80 Gew.-%, besonders bevorzugt 10 bis 70 Gew.-%.

Die Glasübergangstemperatur T_{g} des funktionalisierten Styrol-Butadien-Copolymers A beträgt im unvulkanisierten Zustand -10 °C bis -80 °C. Für gute Wintereigenschaften weist das funktionalisierte Styrol-Butadien-Copolymers A vorzugsweise eine Glasübergangstemperatur von -30 bis -80 °C auf.

Die Bestimmung des Styrol-Gehaltes und des Vinyl-Anteils der im Rahmen der vorliegenden Erfindung diskutierten Polymere erfolgt mittels ¹³C-NMR (Lösungsmittel Deuterochloroform CDCl₃; NMR: *engl.* "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol). Die Bestimmung der Glasübergangstemperatur (T_{g}) erfolgt anhand von Dynamischer-Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Die Herstellung des funktionalisierten Styrol-Butadien-Copolymers A ist beispielsweise in der EP 2 703 416 A1 beschrieben.

Das funktionalisierte Styrol-Butadien-Copolymer A ist an einem Kettenende mit einer aminogruppen- und/oder ammoniumgruppen-enthaltenden Organosilylgruppe funktionalisiert. Derartige Funktionalisierungen können erhalten werden, indem man das Polymer mit einer aminogruppen-enthaltenden Alkoxysilylverbindung mit Schutzgruppen an der Aminogruppe reagieren lässt. Beispielsweise kann N,N-Bis(trimethylsily)aminopropylmethyldiethoxysilan eingesetzt werden. Weitere mögliche Substanzen für eine derartige Funktionalisierung sind in der EP 2 703 416 A1 beschrieben. Nach Entschützung erhält man das funktionalisierte Styrol-Butadien-Copolymer A.

Das funktionalisierte Styrol-Butadien-Copolymer A ist am anderen Kettenende mit einer Aminogruppe funktionalisiert. Dabei kann es sich um primäre, sekundäre oder tertiäre Aminogruppen handeln, die auch ringförmig vorliegen können. Die Funktionalisierung kann erreicht werden, indem bei der Polymerisation Lithiumamide, wie in der EP 2 703 416 A1 beschrieben, zugegeben werden oder die Amide in situ durch Zugabe von n-Butyllithium und Aminen, z. B. ringförmigen Aminen wie Piperidin oder Piperazine, bei der Polymerisation erzeugt werden.

Es handelt sich bei der Aminogruppe am anderen Kettenende um eine ringförmige Diamingruppe. Hierzu kann beispielsweise N-(t-Butyldimethylsilyl)piperazin in Kombination mit n-Butyllithium bei der Polymerisation zugegeben werden.

Die erfindungsgemäße Kautschukmischung enthält 20 bis 100 phr, vorzugsweise 50 bis 100 phr, zumindest eines funktionalisierten Styrol-Butadien-Copolymers A. Es können auch mehrere Polymere dieses Typs im Verschnitt eingesetzt werden.

Die erfindungsgemäße Kautschukmischung enthält weiterhin bis zu 80 phr, vorzugsweise bis zu 50 phr, zumindest eines weiteren Dienkautschuks. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den Dienkautschuken kann es sich z. B. um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-DienKautschuk handeln. Die Kautschuke können als reine Kautschuke oder in ölverstreckter Form eingesetzt werden.

Bevorzugt ist der weitere Dienkautschuk jedoch ausgewählt aus der Gruppe, bestehend aus natürlichem Polyisopren, synthetischem Polyisopren, Polybutadien und weiteren Styrol-Butadien-Copolymeren. Diese Dienkautschuke lassen sich gut zu der Kautschukmischung verarbeiten und ergeben in den vulkanisierten Reifen gute Reifeneigenschaften.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%. Ferner ist auch ein Gemisch eines oder mehrerer natürlicher Polyisoprene mit einem oder mehreren synthetischen Polyisoprenen denkbar. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Bei dem Butadien-Kautschuk (BR, Polybutadien) kann es sich um alle dem Fachmann bekannten Typen mit einem M_{w} von 250000 bis 500000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem weiteren Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem M_{w} von 250000 bis 600000 g/mol (zweihundertfünfzigtausend bis sechshunderttausend Gramm pro Mol).

Das oder die eingesetzte(n) weiteren Styrol-Butadien-Copolymere kann/können mit anderen Modifizierungen und Funktionalisierungen als beim Styrol-Butadien-Copolymer A endgruppenmodifiziert und/oder entlang der Polymerketten funktionalisiert sein.

Die Kautschukmischung enthält 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele handeln, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt. Das Styrol-Butadien-Copolymer A kann mit seiner Aminogruppenfunktionalisierung mit dem Ruß in Wechselwirkung treten.

Zur Reduzierung des Rollwiderstandes hat es sich als vorteilhaft erwiesen, wenn die Kautschukmischung als Füllstoff Kieselsäure enthält. Das Styrol-Butadien-Copolymer A kann über seine aminogruppen- und/oder ammoniumgruppen-enthaltenden Organosilylgruppen mit der Kieselsäure in Wechselwirkung treten.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Vorzugsweise enthält die Kautschukmischung 50 bis 150 phr Kieselsäure, um eine gute Verarbeitbarkeit bei guten Reifeneigenschaften zu erzielen.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung eingesetzt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Erfindungswesentlich ist, dass die Kautschukmischung 5 bis 150 phr, bevorzugt 20 bis 70 phr, besonders bevorzugt 20 bis 40 phr, zumindest eines Harzes auf der Basis von Isopropenylbenzol enthält.

Harze auf der Basis von Isopropenylbenzol, auch AMS-Harze (a-Methylstyrol-Harze) genannt, fallen als Copolymere bei der Polymerisation der im Leichtöl des Steinkohlenteers enthaltenen ungesättigten Verbindungen an. Sie sind z. B. unter dem Namen Sylvares^{™} SA 85 AMS resin von der Firma Kraton erhältlich.

In der Kautschukmischung können außerdem Weichmacher in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und
Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Fahrzeugluftreifen, wie PKW-, Van- , LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die dann ein funktionalisierte Styrol-Butadien-Copolymer A, ggf. einen weiteren Dienkautschuk, einen Füllstoff und ein Harz auf der Basis von Isopropenylbenzol enthält. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die Erfindung soll nun anhand von Vergleichs- und Ausführungsbeispielen, die in der Tabellen 1 und 2 zusammengefasst sind, näher erläutert werden.

Es wurde ein funktionalisiertes **Styrol-Butadien-Copolymer A1** gemäß folgender Versuchsbeschreibung synthetisiert:
In einem 5 L-Autoklaven wurden unter Stickstoffatmosphäre 2750 g Cyclohexan, 10,3 g Tetrahydrofuran, 50 g Styrol, 440 g 1,3-Butadien und 3,48 mmol N-(t-Butyldimethylsilyl)piperazin gegeben. Die Temperatur der Reaktionsmischung wurde auf 10 °C heruntergekühlt und im Anschluss eine Cyclohexanlösung, enthaltend 5,8 mmol n-Butyllithium, zum Start der Polymerisationsreaktion zugegeben. Die Polymerisation wurde unter adiabatischen Bedingungen durchgeführt. Es wurde eine maximale Temperatur von 90 °C erreicht. Bei Erreichung eines Umsetzungsgrades von 99 % wurden 10 g 1,3-Butadien hinzugefügt und die Monomere wurden für weitere 5 min polymerisiert. 10 g des entstandenen Polymers wurden für Analysezwecke entnommen. Anschließend wurde eine Lösung aus 4,96 mmol N,N-bis(Trimethylsilyl)aminopropylmethyldimethoxysilan in Cyclohexan zum restlichen Reaktionsgemisch hinzugefügt und für 15 min reagieren gelassen. Zu der erhaltenen Polymerlösung mit einem Polymer auf Basis von konjugierten Dienen wurden 2,07g (12,18 mmol) Siliziumtetrachlorid als ein Metallhalogenid gegeben. Es wurde für 5 min gemischt. Danach wurde eine Cyclohexanlösung enthaltend 4,96 mmol Tetrakis(2-Ethylhexyloxy)titan hinzugefügt und für weitere 5 min gemischt. Im Anschluss wurden 2,0 g 2,6-Di-tert-butyl-p-cresol zugegeben. Das Lösemittel wurde danach mit Hilfe einer Wasserdampfdestillation entfernt, wobei der pH-Wert mi Hilfe von Natriumhydroxid auf 10 eingestellt wurde. Das verbleibende funktionalisierte Styrol-Butadien-Copolymer A wurde mit Heizwalzen bei einer Temperatur von 110 °C getrocknet.

Dieses so erhaltene funktionalisierte Styrol-Butadien-Copolymer A1 wurde für die erfindungsgemäßen Mischungen der Tabelle 1 eingesetzt.

Ferner wurde ein funktionalisiertes **Styrol-Butadien-Copolymer A2** gemäß folgender Versuchsbeschreibung synthetisiert:
In einem 5 L-Autoklaven wurden unter Stickstoffatmosphäre 2500 g Cyclohexan, 50 g Tetrahydrofuran, 125 g Styrol, 365 g 1,3-Butadien und 4,2 mmol N-(t-Butyldimethylsilyl)piperazin gegeben. Die Temperatur der Reaktionsmischung wurde auf 10 °C heruntergekühlt und im Anschluss eine Cyclohexanlösung, enthaltend 5,2 mmol n-Butyllithium, zum Start der Polymerisationsreaktion zugegeben. Die Polymerisation wurde unter adiabatischen Bedingungen durchgeführt. Es wurde eine maximale Temperatur von 85 °C erreicht. Bei Erreichung eines Umsetzungsgrades von 99 % wurden 10 g 1,3-Butadien hinzugefügt und die Monomere wurden für weitere 5 min polymerisiert. 10 g des entstandenen Polymers wurden für Analysezwecke entnommen. Anschließend wurde eine Lösung aus 4,46 mmol N,N-bis(Trimethylsilyl)aminopropylmethyldimethoxysilan in Cyclohexan zum restlichen Reaktionsgemisch hinzugefügt und für 15 min reagieren gelassen. Zu der erhaltenen Polymerlösung wurden 2,0 g 2,6-Di-tert-butyl-p-cresol zugegeben. Das Lösemittel wurde danach mit Hilfe einer Wasserdampfdestillation entfernt, wobei der pH-Wert mi Hilfe von Natriumhydroxid auf 9 eingestellt wurde. Das verbleibende funktionalisierte Styrol-Butadien-Copolymer A2 wurde mit Heizwalzen bei einer Temperatur von 110 °C getrocknet.

Dieses so erhaltene funktionalisierte Styrol-Butadien-Copolymer A2 wurde für die erfindungsgemäßen Mischungen der Tabelle 2 eingesetzt.

In den Tabellen 1 und 2 sind Vergleichsmischungen mit V, die erfindungsgemäßen Mischungen mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur mittels Durometer gemäß DIN ISO 7619-1
- Rückprallelastizität bei Raumtemperatur gemäß DIN 53 512 als Indikator für den Nassgriff (kleinerer Wert korreliert mit einem besseren Nassgriff beim Reifen)
- Rückprallelastizität bei 70 °C gemäß DIN 53 512 als Indikator für den Rollwiderstand (größerer Wert korreliert mit einem besseren Rollwiderstand beim Reifen)

**Tabelle 1**

| Bestandteile | Einheit | 1(V) | 2(V) | 3(V) | 4(E) |
|---|---|---|---|---|---|
| Naturkautschuk | phr | 15 | 15 | 15 | 15 |
| SBR^{a} | phr | 85 | | 85 | |
| SBR Al^{b} | phr | | 85 | | 85 |
| Ruß N339 | phr | 5 | 5 | 5 | 5 |
| Kieselsäure | phr | 115 | 115 | 115 | 115 |
| Weichmacher | phr | 49 | 49 | 19 | 19 |
| AMS-Harz^{c} | phr | | | 30 | 30 |
| Zusatzstoffe | phr | 19 | 19 | 19 | 19 |
| Silan-Kupplungsagens^{d} | phr | 8,3 | 8,3 | 8,3 | 8,3 |
| Beschleuniger | phr | 5,4 | 5,4 | 5,4 | 5,4 |
| Schwefel | phr | 1,3 | 1,3 | 1,3 | 1,3 |

| **Eigenschaften** | | | | | |
|---|---|---|---|---|---|
| Rückpra. bei RT | % | 32 | 38 | 25 | 27 |
| Rückpra. bei 70 °C | % | 49 | 56 | 47 | 53 |
| Δ (Rückpra. bei 70 °C - Rückpra. bei RT) | - | 17 | 18 | 22 | 27 |

| | | | | | |
|---|---|---|---|---|---|
| ^{a}NS 612, Nippon Zeon, Japan, lösungspolymerisiertes Styrol-Butadien-Copolymer, Styrol-Anteil: 15 Gew.-%, funktionalisiert mit Epoxy- und Hydroxygruppen ^{b} funktionalisiertes lösungspolymerisiertes Styrol-Butadien-Copolymer A1 gemäß Versuchsbeschreibung, Styrol-Anteil: 10 Gew.-%, Aminfunktionalisierung: Piperazingruppe, Tg = -60 °C ^{c} Sylvares^{™} SA 85 AMS resin, Kraton, Niederlande, Isopropenylbenzol-Harz, Erweichungspunkt = 80 - 90 °C (gemäß ASTM E 28) ^{d} TESPD, 3,3'-Bis(triethoxysilylpropyl)disulfid | | | | | |

Aus den Daten der Tabelle 1 wird ersichtlich, dass erst durch die gleichzeitige Anwesenheit des funktionalisierten Styrol-Butadien-Copolymers A1 und eines Harzes auf der Basis von Isopropenylbenzol (s. 4(E)) eine Verbesserung der Rollwiderstandindikatoren bei gleichzeitiger Verbesserung der Nassbremsindikatoren erreicht werden kann. Besonders überraschend ist, dass die erreichte Verbesserung des Zielkonfliktes aus Rollwiderstand und Nassgriff (s. a. Differenz der Rückprallelastizitäten) deutlich über den additiven Effekt der einzelnen Maßnahmen gemäß 2(V) und 3(V) hinausgeht.

**Tabelle 2**

| **Bestandteile** | **Einheit** | **5(V)** | **6(V)** | **7(V)** | **8(E)** |
|---|---|---|---|---|---|
| Naturkautschuk | phr | 15 | 15 | 15 | 15 |
| SBR ^{e} | phr | 85 | | 85 | |
| SBR A2^{f} | phr | | 85 | | 85 |
| Ruß N339 | phr | 5 | 5 | 5 | 5 |
| Kieselsäure | phr | 115 | 115 | 115 | 115 |
| Weichmacher | phr | 49 | 49 | 19 | 19 |
| AMS-Harz^{c} | phr | | | 30 | 30 |
| Zusatzstoffe | phr | 19 | 19 | 19 | 19 |
| Silan-Kupplungsagens^{d} | phr | 8,3 | 8,3 | 8,3 | 8,3 |
| Beschleuniger | phr | 5,4 | 5,4 | 5,4 | 5,4 |
| Schwefel | phr | 1,3 | 1,3 | 1,3 | 1,3 |

| **Eigenschaften** | | | | | |
|---|---|---|---|---|---|
| Shorehärte | ShoreA | 76 | 69 | 81 | 72 |
| Rückpra. bei RT | % | 18 | 19 | 10 | 8 |
| Rückpra. bei 70 °C | % | 45 | 54 | 40 | 49 |

| | | | | | |
|---|---|---|---|---|---|
| ^{e} NS 616, Nippon Zeon, Japan, lösungspolymerisiertes Styrol-Butadien-Copolymer, Styrol-Anteil: 21 Gew.-%, funktionalisiert mit Epoxy- und Hydroxygruppen ^{f} funktionalisiertes lösungspolymerisiertes Styrol-Butadien-Copolymer A2 gemäß Versuchsbeschreibung, Styrol-Anteil: 27 Gew.-%, Aminfunktionalisierung: Piperazingruppe, Tg = -23 °C ^{c} Sylvares^{™} SA 85 AMS resin, Kraton, Niederlande, Isopropenylbenzol-Harz, Erweichungspunkt = 80 - 90 °C (gemäß ASTM E 28) ^{d} TESPD, 3,3'-Bis(triethoxysilylpropyl)disulfid | | | | | |

Der Tabelle 2 kann man entnehmen, dass durch die spezielle Kombination des funktionalisierten Styrol-Butadien-Copolymers A2 mit einem Harz auf der Basis von Isopropenylbenzol (s. 8(E)) eine Verbesserung der Rollwiderstandindikatoren bei gleichzeitiger Verbesserung der Nassbremsindikatoren erreicht werden kann. Insbesondere im Hinblick auf den Nassgriff erhält man eine deutliche Verbesserung, die über die Effekte der Einzelnahmen hinaus geht.

## Patentansprüche

1. Schwefelvernetzbare Kautschukmischung, insbesondere für den Laufstreifen von Fahrzeugluftreifen, enthaltend
- 20 - 100 phr (Gewichtsteile, bezogen auf 100 Gewichtsteile der gesamten Kautschuke in der Mischung) zumindest eines funktionalisierten Styrol-Butadien-Copolymers A,
wobei das funktionalisierte Styrol-Butadien-Copolymer A an einem Kettenende mit einer aminogruppen- und/oder ammoniumgruppen-enthaltenden Organosilylgruppe funktionalisiert ist,
und wobei das funktionalisierte Styrol-Butadien-Copolymer A am anderen Kettenende mit einer Aminogruppe funktionalisiert ist, wobei die Aminogruppe am anderen Kettenende eine ringförmige Diamingruppe ist,
- bis zu 80 phr zumindest eines weiteren Dienkautschuks,
- 40 - 350 phr zumindest eines Füllstoffes und
- 5 bis 150 phr zumindest eines Harzes auf der Basis von Isopropenylbenzol.

2. Kautschukmischung nach Anspruch 1, **dadurch gekennzeichnet, dass** das funktionalisierte Styrol-Butadien-Copolymer A ein lösungspolymerisiertes Styrol-Butadien-Copolymer ist.

3. Kautschukmischung nach Anspruch 1 oder 2, **dadurch gekennzeichnet, dass** das funktionalisierte Styrol-Butadien-Copolymer A einen Styrol-Gehalt von 5 bis 20 Gew.-% aufweist.

4. Kautschukmischung nach Anspruch 1 oder 2, **dadurch gekennzeichnet, dass** das funktionalisierte Styrol-Butadien-Copolymer A einen Styrol-Gehalt von 21 bis 30 Gew.-% aufweist.

5. Kautschukmischung nach zumindest einem der vorhergehenden Ansprüche, **dadurch gekennzeichnet, dass** das funktionalisierte Styrol-Butadien-Copolymer A eine Glasübergangstemperatur von -30 bis -80 °C aufweist.

6. Kautschukmischung nach zumindest einem der vorhergehenden Ansprüche, **dadurch gekennzeichnet, dass** der weitere Dienkautschuk ausgewählt ist aus der Gruppe, bestehend aus natürlichem Polyisopren, synthetischem Polyisopren, Polybutadien und weiteren Styrol-Butadien-Copolymeren.

7. Kautschukmischung nach zumindest einem der vorhergehenden Ansprüche, **dadurch gekennzeichnet, dass** sie als Füllstoff Kieselsäure enthält.

8. Kautschukmischung nach Anspruch 7, **dadurch gekennzeichnet, dass** sie 50 bis 150 phr Kieselsäure enthält.

9. Kautschukmischung nach Anspruch 7 oder 8, **dadurch gekennzeichnet, dass** sie 1 - 15 phf (Gewichtsteile, bezogen auf 100 Gewichtsteile Kieselsäure) zumindest eines Silan-Kupplungsagenzes enthält.

10. Kautschukmischung nach zumindest einem der vorhergehenden Ansprüche, **dadurch gekennzeichnet, dass** sie 20 bis 70 phr, vorzugsweise 20 bis 40 phr, zumindest eines Harzes auf der Basis von Isopropenylbenzol enthält.

11. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 10 besteht.

## Claims

1. Sulfur-crosslinkable rubber mixture, in particular for the tread of pneumatic vehicle tires, containing
- 20-100 phr (parts by weight based on 100 parts by weight of the total rubbers in the mixture) of at least one functionalized styrene-butadiene copolymer A, wherein the functionalized styrene-butadiene copolymer A is functionalized with an amino- and/or ammonium-containing organosilyl group at one chain end and wherein the functionalized styrene-butadiene copolymer A is functionalized with an amino group at the other chain end, wherein the amino group at the other chain end is a cyclic diamine group
- up to 80 phr of at least one further diene rubber,
- 40-350 phr of at least one filler and
- 5 to 150 phr of at least one resin based on isopropenylbenzene.

2. Rubber mixture according to Claim 1, **characterized in that** the functionalized styrene-butadiene copolymer A is a solution polymerized styrene-butadiene copolymer.

3. Rubber mixture according to Claim 1 or 2, **characterized in that** the functionalized styrene-butadiene copolymer A has a styrene content of 5% to 20% by weight.

4. Rubber mixture according to Claim 1 or 2, **characterized in that** the functionalized styrene-butadiene copolymer A has a styrene content of 21% to 30% by weight.

5. Rubber mixture according to at least one of the preceding claims, **characterized in that** the functionalized styrene-butadiene copolymer A has a glass transition temperature of -30°C to -80°C.

6. Rubber mixture according to at least one of the preceding claims, **characterized in that** the further diene rubber is selected from the group consisting of natural polyisoprene, synthetic polyisoprene, polybutadiene and further styrene-butadiene copolymers.

7. Rubber mixture according to at least one of the preceding claims, **characterized in that** it contains silica as a filler.

8. Rubber mixture according to Claim 7, **characterized in that** it contains 50 to 150 phr of silica.

9. Rubber mixture according to Claim 7 or 8, **characterized in that** it contains 1-15 phf (parts by weight based on 100 parts by weight of silica) of at least one silane coupling agent.

10. Rubber mixture according to at least one of the preceding claims, **characterized in that** it contains 20 to 70 phr, preferably 20 to 40 phr, of at least one resin based on isopropenylbenzene.

11. Pneumatic vehicle tire having a tread which at least in its roadway-contacting portion consists of a sulfur-vulcanized rubber mixture according to any of Claims 1 to 10.

## Revendications

1. Mélange de caoutchouc réticulable au soufre, en particulier pour la bande de roulement de pneumatiques de véhicules, contenant
- 20 à 100 phr (parties en poids, par rapport à 100 parties en poids des caoutchoucs totaux dans le mélange) d'au moins un copolymère A fonctionnalisé de styrène-butadiène,
le copolymère A fonctionnalisé de styrène-butadiène étant fonctionnalisé au niveau d'une terminaison de chaîne avec un groupe organosilyle contenant des groupes amino et/ou des groupes ammonium,
et le copolymère A fonctionnalisé de styrène-butadiène étant fonctionnalisé au niveau de l'autre terminaison de chaîne avec un groupe amino, le groupe amino au niveau de l'autre terminaison de chaîne étant un groupe diamine cyclique,
- jusqu'à 80 phr d'au moins un autre caoutchouc de diène,
- 40 à 350 phr d'au moins une charge et
- 5 à 150 phr d'au moins une résine à base d'isopropénylbenzène.

2. Mélange de caoutchouc selon la revendication 1, **caractérisé en ce que** le copolymère A fonctionnalisé de styrène-butadiène est un copolymère de styrène-butadiène polymérisé en solution.

3. Mélange de caoutchouc selon la revendication 1 ou 2, **caractérisé en ce que** le copolymère A fonctionnalisé de styrène-butadiène présente une teneur en styrène de 5 à 20 % en poids.

4. Mélange de caoutchouc selon la revendication 1 ou 2, **caractérisé en ce que** le copolymère A fonctionnalisé de styrène-butadiène présente une teneur en styrène de 21 à 30 % en poids.

5. Mélange de caoutchouc selon au moins l'une quelconque des revendications précédentes, **caractérisé en ce que** le copolymère A fonctionnalisé de styrène-butadiène présente une température de transition vitreuse de -30 à -80 °C.

6. Mélange de caoutchouc selon au moins l'une quelconque des revendications précédentes, **caractérisé en ce que** le caoutchouc de diène supplémentaire est choisi dans le groupe constitué par un polyisoprène naturel, un polyisoprène synthétique, un polybutadiène et d'autres copolymères de styrène-butadiène.

7. Mélange de caoutchouc selon au moins l'une quelconque des revendications précédentes, **caractérisé en ce qu'**il contient de l'acide silicique en tant que charge.

8. Mélange de caoutchouc selon la revendication 7, **caractérisé en ce qu'**il contient 50 à 150 phr d'acide silicique.

9. Mélange de caoutchouc selon la revendication 7 ou 8, **caractérisé en ce qu'**il contient 1 à 15 phf (parties en poids, par rapport à 100 parties en poids d'acide silicique) d'au moins un agent de couplage de silane.

10. Mélange de caoutchouc selon au moins l'une quelconque des revendications précédentes, **caractérisé en ce qu'**il contient 20 à 70 phr, de préférence 20 à 40 phr, d'au moins une résine à base d'isopropénylbenzène.

11. Pneumatique de véhicule comportant une bande de roulement, dont la partie entrant au moins en contact avec la chaussée est constituée d'un mélange de caoutchouc vulcanisé au soufre selon l'une quelconque des revendications 1 à 10.
